# FASCICULE DE BREVET EUROPEEN

(11) **EP 2 365 920 B1**
(45) Date de publication et mention de la délivrance du brevet: **29.07.2015**
(21) Numéro de dépôt: 09801227.1
(22) Date de dépôt: 11.12.2009
(51) Int. Cl.: B60R 3/02, B61D 23/02, B61D 23/00, A61G 3/06

(54) **DISPOSITIF DEPLOYABLE POUR L'ACCES A UN VEHICULE**
AUSZIEHBARE VORRICHTUNG FÜR ZUGANG ZU EINEM FAHRZEUG
EXTENDABLE DEVICE FOR ACCESSING A VEHICLE

(30) Priorité: 12.12.2008 FR 0806988
(43) Date de publication de la demande: 21.09.2011
(73) Titulaire: Faiveley Transport, 93200 Saint Denis (FR)
(72) Inventeur: CARRION ESPELTA Juan, Les Boryes Del Camp (ES); CASTELLNOU RIBAU Alex, Reus (ES)
(74) Mandataire: Novagraaf Technologies
(86) Numéro de dépôt international: PCT/FR2009/001418
(87) Numéro de publication internationale: WO 2010/066971

(56) Documents cités:
- EP-A- 0 416 539
- WO-A-00/12039
- DE-A1- 4 441 929
- DE-A1- 10 043 561
- US-A1- 2006 245 883

## Description

### DOMAINE TECHNIQUE DE L'INVENTION

L'invention concerne un dispositif déployable pour l'accès à un véhicule, et notamment pour les véhicules ferroviaires.

L'invention concerne notamment les dispositifs pour l'accès des véhicules ferroviaires aux personnes à mobilité réduite.

### ÉTAT DE LA TECHNIQUE

Dans l'art antérieur, il existe de nombreux types de dispositifs permettant l'accès à des véhicules, et notamment à des véhicules ferroviaires.

Ces dispositifs, généralement placés en dessous des portes d'accès au véhicule, comprennent une rampe mobile entre une position escamotée et une position déployée dans laquelle elle permet l'accès au véhicule. Des moyens d'entraînement motorisés permettent d'entraîner la rampe.

Toutefois, dans les dispositifs de l'art antérieur, la rampe ainsi que les moyens d'entraînement de la rampe ne sont pas protégés. En effet, le dispositif, en position escamotée, est disposé en dessous de la caisse du véhicule et est ainsi directement exposé aux poussières, particules et intempéries. Par conséquent, les dispositifs de l'art antérieur s'encrassent et se dégradent rapidement.

En outre, les dispositifs de l'art antérieur sont encombrants, mécaniquement complexes et/ou présentent un dénivelé entre la rampe, en position déployée, et le seuil d'accès au véhicule, si bien que les dispositifs ne sont pas totalement adaptés pour faciliter l'accès aux dispositifs d'aide à la mobilité, tels que les fauteuils roulants.

Un dispositif selon le préambule de la revendication 1 est connu du document EP 0 416 539 A1.

### OBJET DE L'INVENTION

L'invention vise à remédier à ces problèmes en proposant un dispositif déployable permettant l'accès à un véhicule qui soit simple, protégé des poussières et particules lorsqu'il est rangé, et particulièrement bien adaptée pour l'accès des dispositifs d'aide à la mobilité.

À cet effet, l'invention propose un dispositif déployable pour permettre l'accès à un véhicule selon la revendicaiton 1.

Ainsi, lorsque la rampe est en position rangée, elle est disposée dans le logement dont la fenêtre est fermée par le volet et la rampe est ainsi protégée de l'environnement extérieur.

En outre, lorsque le volet est en position déployée, il forme un plan incliné entre la rampe et le seuil de sorte à compenser le dénivelé et faciliter ainsi l'accès aux dispositifs d'aide à la mobilité.

Ainsi, par l'association d'un mouvement simple de translation de la rampe et un mouvement simple de rotation du volet mobile, on obtient un dispositif simple, peu encombrant en position de rangée, pleinement opérationnel en fonction déployée, et ne nécessitant qu'une faible énergie pour son déploiement.

Selon l'invention, le dispositif comporte des moyens de liaison mécanique entre la rampe et le volet, agencés pour entraîner le mouvement du volet entre sa position de protection et sa position déployée lors du mouvement de la rampe entre sa position rangée et sa position déployée et entraîner le mouvement de la rampe de sa position rangée vers sa position déployée lors du mouvement du volet de sa position de protection vers sa position déployée.

Par conséquent, lorsqu'on déplace la rampe, le volet est simultanément déplacé. En outre, un déplacement du volet initie le déplacement de la rampe vers sa position déployée. Le volet est donc adapté pour présenter une fonction d'actionnement manuel du dispositif.

Avantageusement, la rampe comporte un plan incliné par rapport à l'axe A et mobile en translation selon l'axe A, lors du mouvement de la rampe entre la position rangée et la position déployée. Ainsi, le mouvement de la rampe ne nécessite pas de rotation pour venir dans une position déployée, de service, dans laquelle les utilisateurs peuvent accéder aux véhicules.

Dans un mode de réalisation, les moyens de liaison mécanique comportent au moins un galet solidaire du volet et une glissière de guidage du galet, solidaire de la rampe. La glissière comporte une extrémité coudée et permet ainsi de transformer le mouvement de translation de la rampe en un mouvement de rotation du volet ou inversement.

Le dispositif comporte des moyens d'entraînement agencés pour entraîner la rampe en translation, comprenant des moyens moteurs, des moyens de transmission, débrayables, du mouvement des moyens moteurs à la rampe.

Par conséquent, le dispositif selon l'invention peut être entraîné de façon motorisée et peut également être actionné manuellement lorsque les moyens de transmission sont débrayés.

Avantageusement, les moyens d'entraînement comprennent un réducteur irréversible. L'irréversibilité du réducteur permet de verrouiller le dispositif.

Le dispositif comporte des moyens de commande manuelle de l'embrayage et du débrayage des moyens de transmission. Ainsi, l'utilisateur peut choisir grâce audit moyen de commande entre une utilisation manuelle, de secours, ou une utilisation motorisée.

Avantageusement, la rampe comporte un châssis, un caisson mobile par rapport au châssis, sous la charge d'une personne, et un capteur sensible à la pression, disposé entre le châssis et le caisson de sorte à détecter la présence d'une personne sur le caisson.

Ainsi, la sécurité du dispositif est assurée en détectant la présence d'une personne ou d'un objet sur la rampe et éviter le rangement du dispositif dans ce cas.

Le caisson est monté pivotant sur le châssis, autour d'un axe géométrique C, fixe par rapport au châssis et perpendiculaire à l'axe A de translation. Avantageusement, la rampe présente une extrémité intérieure située dans le logement lorsque la rampe est en position déployée, l'axe C étant situé à proximité de l'extrémité intérieure. Ainsi, quelle que soit la position de la charge sur la rampe, elle sera détectée.

Avantageusement, la rampe présente un bord d'accostage en caoutchouc afin de protéger la rampe et diminuer les nuisances sonores, lors de l'accostage.

Avantageusement, le dispositif comporte des rails de guidage de la rampe entre sa position rangée dans le logement et sa position déployée. Ainsi, le déplacement de la rampe est réalisé par des moyens simples.

Dans un mode de réalisation, la rampe comporte une ligne de rupture transversale, perpendiculaire à l'axe A de translation, formant un tracé déterminé selon lequel la rampe se rompt lorsqu'une contrainte de flexion longitudinale est appliquée à la rampe. Aussi, en cas de collision de la rampe lors de son déploiement, seule la rampe sera potentiellement endommagée. Par conséquent, cette caractéristique permet de limiter les travaux et les coûts de réparation du dispositif lors d'un tel incident.

Enfin, selon un second aspect, l'invention concerne une plateforme d'accès à un véhicule comportant un seuil d'accès, et un dispositif déployable d'accès au véhicule selon le premier aspect de l'invention et un logement de rangement du dispositif s'étendant au-dessous d'un seuil d'accès au véhicule et présentant une fenêtre autorisant le déploiement du dispositif.

### BRÈVE DESCRIPTION DES FIGURES

D'autres objets et avantages de l'invention apparaîtront au cours de la description qui suit, faite en référence aux dessins annexés, dans lesquels :
- la figure 1 est une vue en perspective d'une plateforme d'accès à un véhicule équipée d'un dispositif pour l'accès au véhicule, la rampe étant en position rangée dans le logement disposé en dessous du seuil ;
- la figure 2 est une vue détaillée de la figure 1 ;
- la figure 3 est une vue en perspective d'une plateforme d'accès à un véhicule équipée d'un dispositif déployable selon l'invention, la rampe étant en position déployée ;
- la figure 4 est une vue détaillée de la figure 3 ;
- la figure 5 est une vue détaillée en perspective du dispositif selon l'invention lorsque la rampe et le volet sont en position déployée ;
- la figure 6 est une vue en coupe du seuil et du dispositif selon l'invention lorsque la rampe est en position rangée ;
- la figure 7 illustre le volet et les moyens de liaison mécanique entre la rampe et le volet lorsque le volet est en position de protection et la rampe en position de rangement ;
- la figure 8 illustre la rampe, le volet et les moyens de liaison mécanique entre ces deux éléments lors de leur mouvement vers leur position déployée ;
- la figure 9 illustre des moyens d'entraînement de la rampe selon un mode de réalisation de l'invention.

### EXEMPLE DE RÉALISATION

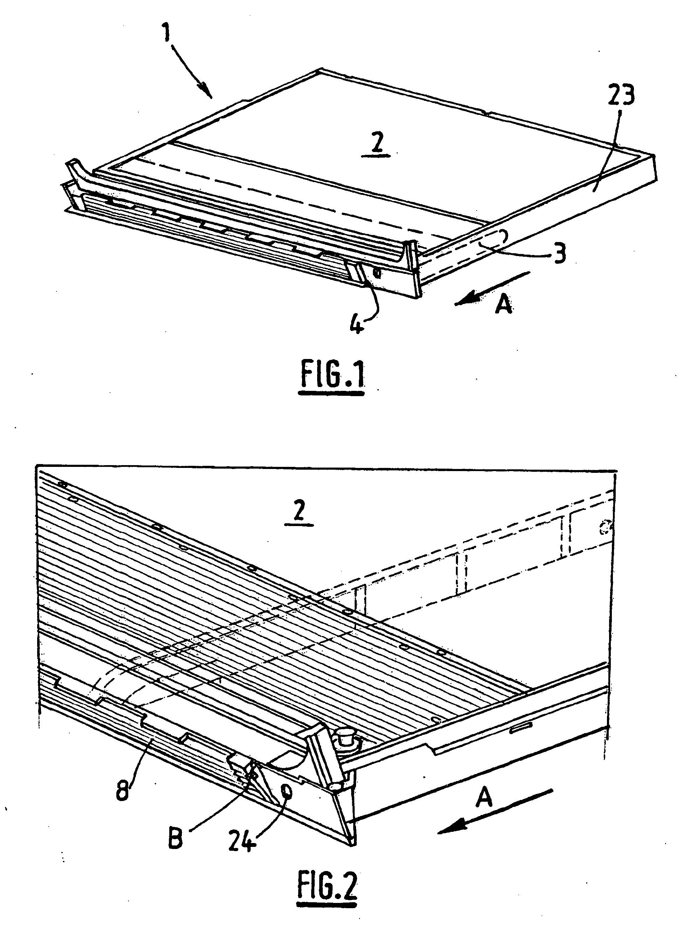

La figure 1 représente une plateforme d'accès 1 à un véhicule. Cette plateforme 1 est destinée à être assemblée à un véhicule, non représenté, du type ferroviaire notamment, au-dessous, au droit d'une porte permettant d'accéder au véhicule. À cet effet, la plateforme 1 est munie de moyens de fixation 23 au véhicule.

La plateforme 1 comporte une surface plane supérieure destinée à former un seuil d'accès 2 au véhicule et un logement 3, disposé en dessous de la surface de seuil, pour le rangement du dispositif déployable. Bien évidemment, le logement 3 présente une fenêtre 4 débouchant vers l'extérieur du véhicule et permettant le mouvement du dispositif.

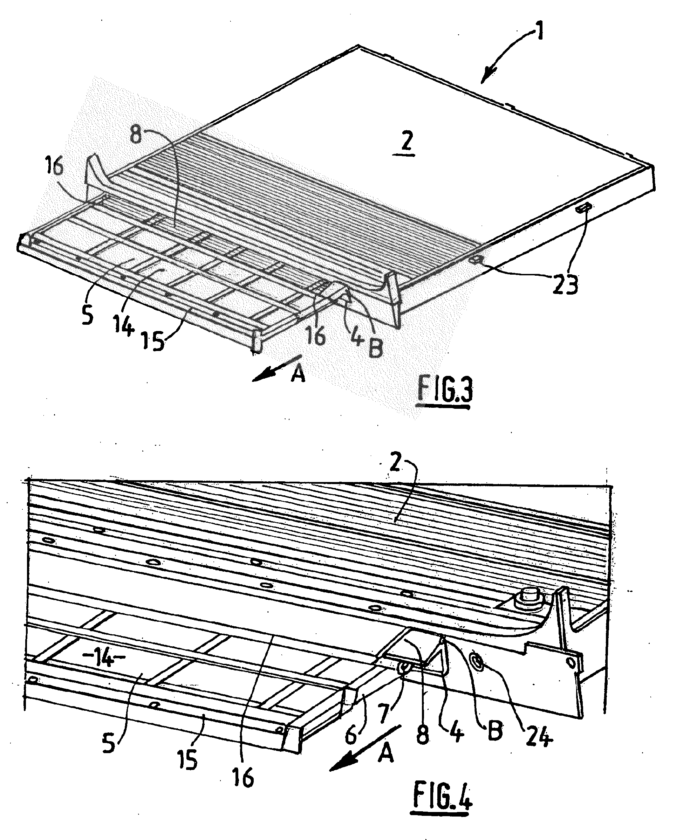

Le dispositif selon l'invention comprend une rampe 5 mobile en translation, selon l'axe géométrique A, entre une position rangée dans le logement (figures 1, 2, 6 et 7) et une position déployée (figures 3, 4 et 5). L'axe géométrique A est fixe par rapport à la plateforme, de sorte que le mouvement de la rampe est une pure translation, sans rotation. Afin de permettre le guidage de la rampe 5 en translation, le dispositif comporte des rails de guidage, non représentés, fixées aux bords latéraux du logement 3. Des pions 6, 7 disposés de part et d'autre de la rampe 5 coulissent dans lesdits rails afin d'assurer le guidage de la rampe 5.

À son extrémité avant, la rampe 5 comporte un bord d'accostage 15 qui, en position déployée, vient à proximité du sol, d'un quai par exemple afin de permettre le passage du sol vers le véhicule. Afin de compenser, en partie, le dénivelé entre le quai et le seuil 2, la rampe 5 présente une surface supérieure 14 inclinée.

Le dispositif selon l'invention comprend en outre un volet 8 monté mobile en rotation sur la plateforme 1, autour d'un axe B, perpendiculaire à l'axe A de translation. L'axe B est situé à proximité du bord supérieur de la fenêtre 4 du logement 3. Le volet est mobile entre une position de protection (figures 1, 2, 7) et une position déployée (figures 3, 4, 5 et 8).

Dans sa position de protection, le volet 8 ferme la fenêtre 4 du logement 3 afin d'assurer l'étanchéité du logement 3 et protéger les éléments du dispositif qui sont logés à l'intérieur du logement 3. À cet effet, les dimensions du volet 8 sont légèrement supérieures aux dimensions de la fenêtre 4, de sorte à recouvrir entièrement la fenêtre 4 lorsqu'il est en position de protection.

Dans sa position déployée, le volet 8 forme un plan incliné entre la rampe 5 et le seuil d'accès 2. Ainsi, le volet 8 permet de compenser le léger dénivelé entre le seuil 2 et la rampe 5. L'invention est donc particulièrement adaptée pour faciliter l'accès du véhicule aux dispositifs d'aide à la mobilité, tels que les fauteuils roulants.

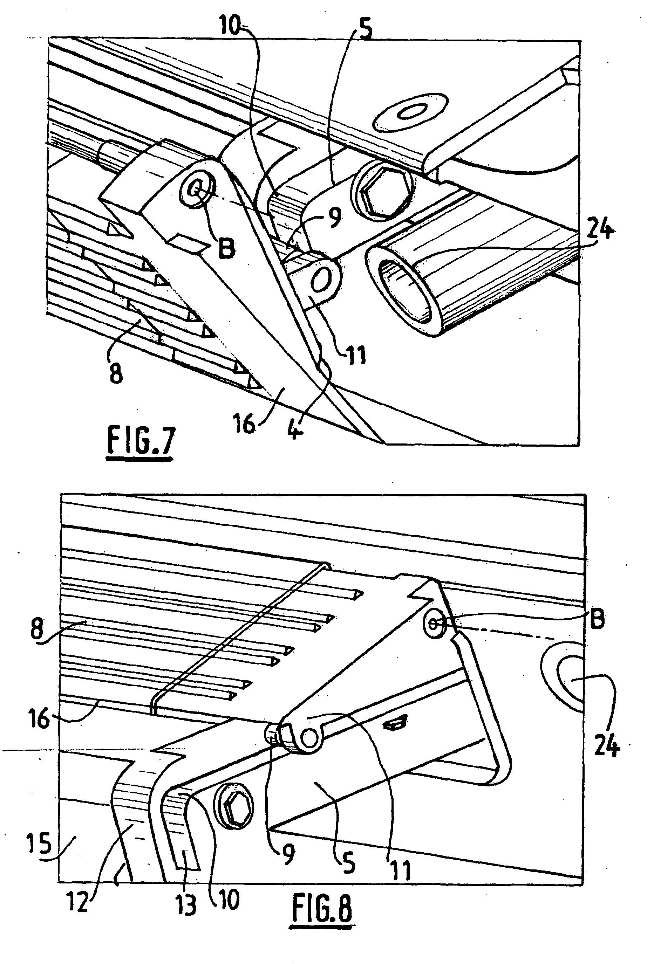

La liaison mécanique entre la rampe 5 et le volet 8 est représentée de façon détaillée sur les figures 7 et 8.

Le volet 8 comporte de part et d'autre de ses extrémités latérales des galets 9 qui sont guidés dans des glissières 10 formées sur les bords latéraux de la rampe 5. Les galets de guidage 9 sont, par exemple, portés par des pattes 11 disposées à proximité de l'extrémité inférieure du volet 8.

La glissière 10 comporte, à proximité de l'extrémité avant de la rampe 5, une extrémité coudée. L'extrémité coudée de la glissière 10 comporte deux surfaces de guidages, avant 12 et arrière 13, délimitant le trajet de guidage du galet 9.

Lors du début du mouvement de la rampe 5, de sa position rangée vers sa position déployée, les galets 9 sont guidés dans l'extrémité coudée des glissières 10 de sorte à faire pivoter le volet 8, autour de l'axe B, vers sa position déployée. Par la suite, les galets 9 sont guidés dans une portion rectiligne des glissières. Enfin, vers la fin du mouvement de translation de la rampe 5, le bord avant du volet 8 vient coopérer avec la surface supérieure 14 inclinée de la rampe 5.

Les moyens de liaison sont donc agencés pour entraîner le mouvement du volet 8 entre sa position de protection et sa position déployée, lors du mouvement de la rampe 5 entre sa position rangée et sa position déployée.

Par ailleurs, le volet 8 présente une fonction d'actionnement manuel et est apte à initier le mouvement de la rampe 5 vers sa position déployée.

Pour ce faire, lorsque le volet 8 est pivoté manuellement vers sa position déployée, le galet 9 coulisse dans l'extrémité coudée de la glissière 10 et s'appui contre la surface de guidage avant 12, de sorte à initier la translation de la rampe 5 vers sa position déployée.

Par conséquent, lorsque le volet 8 est pivoté vers sa position déployée, l'extrémité avant de la rampe 5 est dégagée du logement 3. Ainsi, l'extrémité avant de la rampe 5 peut être saisie manuellement de sorte à entraîner la rampe 5 vers sa position déployée.

Pour ranger manuellement le dispositif, l'utilisateur fait glisser la rampe 5 vers sa position de rangement jusqu'à ce que le galet 9 atteigne l'extrémité coudée de la glissière 10 puis fait pivoter le volet 8 vers sa position de protection afin d'achever le mouvement de la rampe 5 vers sa position rangée.

Les moyens de liaison sont donc agencés pour entraîner le mouvement de la rampe 5 de sa position rangée vers sa position déployée lors du mouvement du volet 8 de sa position de protection vers sa position déployée et entraîner le mouvement de la rampe 5 vers sa position rangée lors du mouvement du volet 8 vers sa position de protection.

De préférence, le dispositif est équipé de moyens d'entraînement qui sont agencés pour entraîner la rampe 5 le long des rails. Les moyens d'entraînement comprennent des moyens moteurs et des moyens de transmission du mouvement.

Les moyens de transmission permettent la transmission du mouvement des moyens moteurs vers la rampe 5.

Dans un mode de réalisation avantageux, les moyens de transmission sont débrayables. Ainsi, lorsque l'on désire déplacer manuellement le dispositif pour le déployer ou le ranger, les moyens de transmission peuvent être débrayés de manière à ce que la rampe 5 ne soit plus en prise avec les moyens moteurs. Au contraire, lorsque l'on désire actionner le dispositif de façon motorisée, les moyens de transmission sont embrayés. Bien sûr, afin de permettre le débrayage et l'embrayage des moyens de transmission, ceux-ci sont équipés d'un dispositif d'accouplement temporaire aux moyens moteurs.

Par ailleurs, les moyens moteurs comprennent un réducteur irréversible. Lorsque les moyens de transmission sont embrayés, le réducteur irréversible est agencé pour permettre l'entraînement de la rampe 5 par les moyens d'entraînement motorisés et interdire l'actionnement manuel de la rampe 5 entre ses positions, déployée et rangée. Le réducteur assure donc une fonction de verrouillage du dispositif.

Aussi, lorsque le dispositif comprend un tel réducteur irréversible, les moyens de transmission doivent être préalablement déplacés vers leur position débrayée afin de déverrouiller le dispositif et permettre un actionnement manuel du dispositif.

Afin de permettre le déplacement des moyens de transmission entre leur position embrayée et débrayée, le dispositif comporte en outre des moyens de commande manuelle de l'embrayage et du débrayage. Ces moyens de commande pourront notamment comprendre une vis d'actionnement 24 dont la tête, à orifice carré par exemple, débouche à proximité de la fenêtre 4 du logement 3 et dont le déplacement par le personnel autorisé à l'aide d'une clé de service permet d'embrayer ou de débrayer les moyens de transmission.

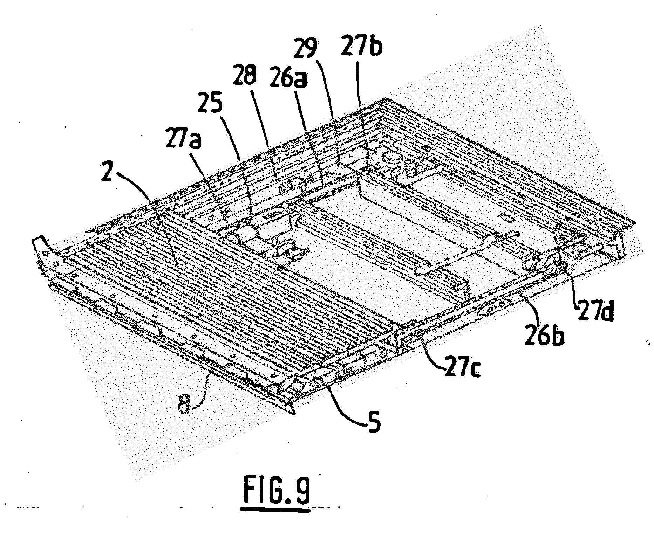

Dans le mode de réalisation illustré sur la figure 9, les moyens d'entraînement comprennent un moteur 25 et deux chaînes de transmission 26a, 26b. Chaque chaîne 26a, 26b coopère avec deux roues crantées 27a, 27b, 27c, 27d, mobiles en rotation selon un axe perpendiculaire à la direction de déplacement de la rampe 5.

La rampe 8 comporte des barres latérales 28 s'étendant de part et d'autre des chaînes et liées à un maillon de celles-ci par une pièce de liaison 29. Ainsi, le mouvement des chaînes entraîne le mouvement de la rampe 8. Sur la figure 9, on notera que seule une des de deux barres latérales 28 est représentée.

Afin de mouvoir la première chaîne, une des roues crantées 27a est connectée au moteur 25. Avantageusement, afin de procurer les avantages mentionnés précédemment, la roue crantée 27a est connectée à l'arbre moteur via une transmission débrayable, non représentée.

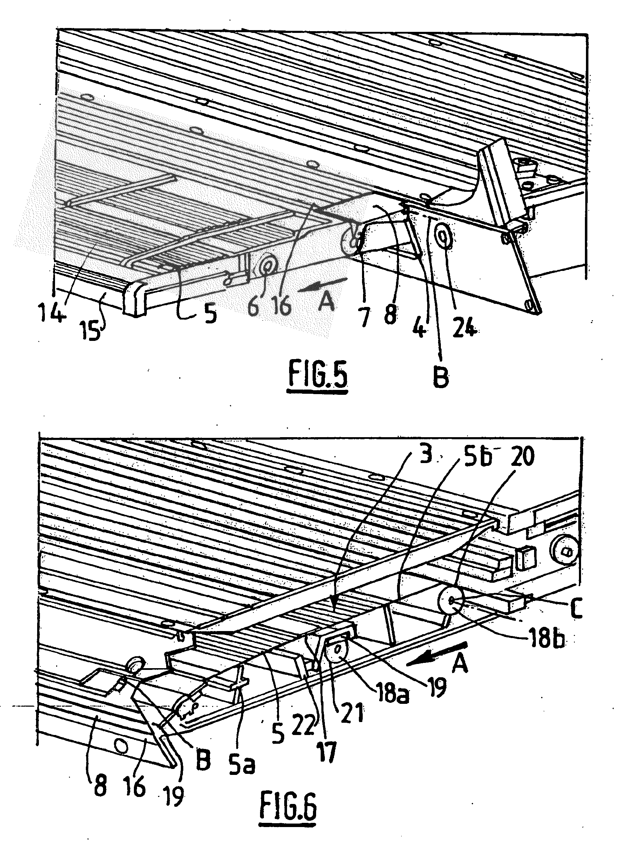

Par ailleurs, la rampe 5, représenté sur la figure 6, comporte un châssis 18a, 18b, un caisson 17 monté mobile par rapport au châssis 18a, 18b et un capteur sensible à la pression 19. Le capteur sensible à la pression 19 est disposé entre le châssis 18a, 18b de la rampe 5 et le caisson 17 de sorte à détecter la présence d'une personne sur le caisson 17. Par conséquent, l'escamotage du dispositif peut être neutralisé lorsqu'une personne ou un élément est placé sur le caisson 17.

Dans le mode de réalisation représenté, le châssis comprend deux traverses 18a et 18b s'étendant perpendiculairement à la direction A de translation de la rampe 5, au travers du caisson 2. Pour des raisons de poids, le caisson 17 est essentiellement creux. Les traverses 18a et 18b comportent à leurs extrémités les pions 6, 7 mobiles dans les rails de guidage de la rampe 5. La première traverse 18b présente une forme cylindrique et est disposée dans une première cavité 20 du caisson 17. Cette cavité 20 présente une forme cylindrique enveloppant en partie la traverse, de manière à former un gond, et permettre la rotation du caisson 17 autour de l'axe C longitudinal de la traverse 18b. La traverse 18b est située à proximité de l'extrémité intérieure du caisson 2, logée en permanence dans le logement 3.

La seconde traverse 18a est disposée dans une seconde cavité 21 du caisson 17. Le capteur sensible à la pression 19 est disposé entre la partie supérieure de la seconde traverse 18a et une surface de contact du caisson 17. Dans le mode de réalisation représenté, le capteur sensible à la pression 19 est du type capteur à bord sensible, s'étendant sur la longueur de la seconde traverse 18a.

Ainsi, lorsqu'une personne ou un objet est présent sur le caisson 17, celui-ci pivote autour de l'axe C de manière à exercer une pression sur le capteur sensible à la pression 19 et détecter cette présence.

Le capteur sensible à la pression 19 est connecté à une unité de commande qui est agencée pour couper l'alimentation des moyens moteurs lorsqu'une présence est détectée sur le caisson 17.

Par ailleurs, la rampe 5, représentée sur la figure 6, comporte une ligne de rupture 22 transversale, perpendiculaire à l'axe A de translation, et formant un tracé déterminé suivant lequel la rampe se rompt lorsqu'une certaine contrainte de flexion longitudinale est appliquée à la rampe 5.

Ainsi, si la rampe 5 rencontre un obstacle lors de son mouvement vers sa position déployée, la rampe 5 se rompt sans que les autres éléments constituant le dispositif, et en particulier les rails de guidage, les moyens de transmission et les moyens moteurs ne soient endommagés. Par conséquent, si un incident de la sorte survient, les opérations de réparation du dispositif pourront alors se limiter à la réparation ou au changement de la rampe 5.

Dans le mode de réalisation représenté, le caisson 17 de la rampe 5 est constitué de deux éléments : un élément avant 5a et un élément arrière 5b. La face arrière de l'élément avant 5a et la face avant de l'élément arrière 5b présentent des formes complémentaires destinées à venir s'emboîter l'une dans l'autre et sont fixées l'une à l'autre, par soudage ou au moyen de tétons de fixation formés dans l'un des éléments avant 5a ou arrière 5b venant s'insérer dans un logement de l'autre élément. La fixation entre ces deux éléments 5a, 5b est assurée de telle sorte que lorsqu'une contrainte de flexion est supérieure à un seuil, l'élément avant 5a et l'élément arrière 5b se désolidarisent. Par exemple, les tétons de fixation se rompent lorsque la contrainte est supérieure à un seuil.

En outre, afin de protéger le bord d'accostage, celui-ci est équipé d'un embout de protection en caoutchouc. Cet embout permet en outre de diminuer les nuisances sonores lors de l'accostage.

L'invention est décrite dans ce qui précède à titre d'exemple. Il est entendu que l'homme du métier est à même de réaliser différentes variantes de réalisation de l'invention sans pour autant sortir du cadre de l'invention.

## Revendications

1. Dispositif déployable pour permettre l'accès à un véhicule, ledit véhicule comportant un logement (3) de rangement du dispositif s'étendant au-dessous d'un seuil d'accès (2) au véhicule et présentant une fenêtre (4) autorisant le déploiement du dispositif, ledit dispositif comprenant :
- une rampe (5) mobile en translation selon un axe A, entre une position rangée dans le logement et une position déployée ; et
- un volet (8) mobile en rotation selon un axe B entre une position de protection dans laquelle il ferme la fenêtre (4) du logement (3) et une position déployée dans laquelle il forme un plan incliné entre la rampe (5) et le seuil d'accès (2) ;
ledit dispositif étant **caractérisé en ce qu'**il comporte des moyens (9, 10) de liaison mécanique entre la rampe (5) et le volet (8), agencés pour entraîner le mouvement du volet (8) entre sa position de protection et sa position déployée lors du mouvement de la rampe (5) entre sa position rangée et sa position déployée et entraîner le mouvement de la rampe (5) de sa position rangée vers sa position déployée lors du mouvement du volet (8) de sa position de protection vers sa position déployée.

2. Dispositif selon la revendication 1, **caractérisé en ce que** la rampe (5) comporte un plan incliné par rapport à l'axe A, mobile en translation selon l'axe A lors du mouvement de la rampe (5) entre la position rangée et la position déployée.

3. Dispositif selon la revendication 1 ou 2, **caractérisé en ce que** les moyens de liaison mécanique comportent au moins un galet (9) solidaire du volet (8) et une glissière de guidage (10) du galet (9), solidaire de la rampe (5).

4. Dispositif selon la revendication 3, **caractérisé en ce que** la glissière (10) comporte une extrémité coudée.

5. Dispositif selon l'une quelconque des revendications 1 à 4, **caractérisé en ce qu'**il comporte des moyens d'entraînement agencés pour entraîner la rampe (5) en translation, comprenant des moyens moteurs, des moyens de transmission débrayables du mouvement des moyens moteurs à la rampe (5).

6. Dispositif selon la revendication 5, **caractérisé en ce que** les moyens d'entraînement comprennent un réducteur irréversible.

7. Dispositif selon l'une des revendications 5 ou 6, **caractérisé en ce qu'**il comporte des moyens de commande manuelle de l'embrayage et du débrayage des moyens de transmission.

8. Dispositif selon l'une des revendications 1 à 7, **caractérisé en ce que** la rampe (5) comporte un châssis (18a, 18b) et un caisson 17 mobile par rapport au châssis (18a, 18b), sous la charge d'une personne, et un capteur sensible à la pression (19), disposé entre le châssis (18a, 18b) et le caisson (17) de sorte à détecter la présence d'une personne sur le caisson (17).

9. Dispositif selon la revendication 8, **caractérisé en ce que** le caisson (17) est monté pivotant sur le châssis (18a, 18b), autour d'un axe C, perpendiculaire à l'axe A de translation.

10. Dispositif selon la revendication 9, **caractérisé en ce que** la rampe (5) présente une extrémité intérieure située dans le logement (3) lorsque la rampe (5) est en position déployée, l'axe C étant situé à proximité de l'extrémité intérieure.

11. Dispositif l'une quelconque des revendications 1 à 10, **caractérisé en ce que** la rampe (5) présente un bord d'accostage (15) en caoutchouc.

12. Dispositif selon l'une quelconque des revendications 1 à 11, **caractérisé en ce qu'**il comporte des rails de guidage de la rampe (5) entre sa position rangée dans le logement et sa position déployée.

13. Dispositif selon l'une des revendications 1 à 12, **caractérisé en ce que** la rampe (5) comporte une ligne de rupture (22) transversale, perpendiculaire à l'axe A de translation, formant un tracé déterminé suivant lequel la rampe (5) se rompt lorsqu'une contrainte de flexion longitudinale est appliquée à la rampe (5).

14. Plateforme (1) d'accès à un véhicule comportant un seuil d'accès (2), et un dispositif déployable d'accès au véhicule selon l'une des revendications 1 à 13 et un logement (3) de rangement du dispositif s'étendant au-dessous d'un seuil d'accès (2) au véhicule et présentant une fenêtre (4) autorisant le déploiement du dispositif.

## Patentansprüche

1. Ausziehbare Vorrichtung, um den Zugang zu einem Fahrzeug zu ermöglichen, wobei das Fahrzeug eine Aufbewahrungsaufnahme (3) der Vorrichtung umfasst, die sich unterhalb einer Eingangsschwelle (2) des Fahrzeugs erstreckt und ein Fenster (4) aufweist, das das Ausziehen der Vorrichtung gestattet, wobei die Vorrichtung Folgendes umfasst:
- eine in Verschiebung entlang einer Achse A bewegliche Rampe (5), zwischen einer in der Aufnahme verstauten Position und einer ausgezogenen Position; und
- eine Klappe (8), die in Drehung entlang einer Achse B zwischen einer Schutzposition, in der sie das Fenster (4) der Aufnahme (3) schließt, und einer ausgezogenen Position, in der sie eine schiefe Ebene zwischen der Rampe (5) und der Eingangsschwelle (2) bildet, beweglich ist;
wobei die Vorrichtung **dadurch gekennzeichnet ist, dass** sie Mittel (9, 10) zum mechanischen Verbinden zwischen der Rampe (5) und der Klappe (8) umfasst, die eingerichtet sind, um die Bewegung der Klappe (8) zwischen ihrer Schutzposition und ihrer ausgezogenen Position bei der Bewegung der Rampe (5) zwischen ihrer verstauten Position und ihrer ausgezogenen Position anzutreiben, und die Bewegung der Rampe (5) von ihrer verstauten Position zu ihrer ausgezogenen Position bei der Bewegung der Klappe (8) von ihrer Schutzposition zu ihrer ausgezogenen Position anzutreiben.

2. Vorrichtung nach Anspruch 1, **dadurch gekennzeichnet, dass** die Rampe (5) eine schiefe Ebene umfasst, die in Bezug auf die Achse A geneigt ist, die in Verschiebung entlang der Achse A bei der Bewegung der Rampe (5) zwischen der verstauten Position und der ausgezogenen Position beweglich ist.

3. Vorrichtung nach Anspruch 1 oder 2, **dadurch gekennzeichnet, dass** die Mittel zur mechanischen Verbindung mindestens eine Walze (9) umfassen, die mit der Klappe (8) fest verbunden ist, und eine Führungsgleitschiene (10) der Rolle (9), die mit der Rampe (5) fest verbunden ist.

4. Vorrichtung nach Anspruch 3, **dadurch gekennzeichnet, dass** die Gleitschiene (10) ein abgewinkeltes Ende umfasst.

5. Vorrichtung nach einem der Ansprüche 1 bis 4, **dadurch gekennzeichnet, dass** sie Mittel zum Antreiben umfasst, die eingerichtet sind, um die Rampe (5) in Verschiebung anzutreiben, die Antriebsmittel, auskuppelbare Mittel zum Übertragen der Bewegung der Antriebsmittel zu der Rampe (5) umfassen.

6. Vorrichtung nach Anspruch 5, **dadurch gekennzeichnet, dass** die Antriebsmittel ein nicht umkehrbares Untersetzungsgetriebe umfassen.

7. Vorrichtung nach einem der Ansprüche 5 oder 6, **dadurch gekennzeichnet, dass** sie Mittel zum manuellen Steuern des Kuppelns und des Auskuppelns der Übertragungsmittel umfasst.

8. Vorrichtung nach einem der Ansprüche 1 bis 7, **dadurch gekennzeichnet, dass** die Rampe (5) ein Chassis (18a, 18b) und einen Kasten (17), der in Bezug auf das Chassis (18a, 18b) unter der Last einer Person beweglich ist, und einen auf Druck (19) reagierenden Fühler umfasst, der zwischen dem Chassis (18a, 18b) und dem Kasten (17) derart angeordnet ist, dass die Gegenwart einer Person auf dem Kasten (17) erfasst wird.

9. Vorrichtung nach Anspruch 8, **dadurch gekennzeichnet, dass** der Kasten (17) schwenkend auf dem Chassis (18a, 18b) um eine Achse C senkrecht zu der Verschiebungsachse A montiert ist.

10. Vorrichtung nach Anspruch 9, **dadurch gekennzeichnet, dass** die Rampe (5) ein inneres Ende aufweist, das sich in einer Aufnahme (3) befindet, wenn die Rampe (5) in ausgezogener Position ist, wobei die Achse C in der Nähe des inneren Endes liegt.

11. Vorrichtung nach einem der Ansprüche 1 bis 10, **dadurch gekennzeichnet, dass** die Rampe (5) eine Ansatzkante (15) aus Kautschuk aufweist.

12. Vorrichtung nach einem der Ansprüche 1 bis 11, **dadurch gekennzeichnet, dass** sie Führungsschienen der Rampe (5) zwischen ihrer in der Aufnahme verstauten und ihrer ausgezogenen Position umfasst.

13. Vorrichtung nach einem der Ansprüche 1 bis 12, **dadurch gekennzeichnet, dass** die Rampe (5) eine Bruchquerlinie (22) senkrecht zu der Verschiebungsachse A umfasst, die einen bestimmten Verlauf bildet, entlang welchem die Rampe (5) bricht, wenn eine Längsbiegungsbelastung auf die Rampe (5) aufgebracht wird.

14. Zugangsplattform (1) zu einem Fahrzeug, die eine Eingangsschwelle (2) und eine ausziehbare Zugangsvorrichtung zum Fahrzeug nach einem der Ansprüche 1 bis 13 umfasst, und eine Aufbewahrungsaufnahme (3), die sich unterhalb einer Eingangsschwelle (2) zum Fahrzeug erstreckt und ein Fenster (4) aufweist, das das Ausziehen der Vorrichtung gestattet.

## Claims

1. Deployable device for allowing access to a vehicle, the said vehicle comprising a housing (3) for stowing the device extending below a vehicle access threshold (2) and having a window (4) allowing the deployment of the device, the said device comprising:
- a ramp (5) which is translatable along an axis A between a position in which it is stowed in the housing and a deployed position; and
- a flap (8) which is rotatable about an axis B between a protection position in which it closes the window (4) of the housing (3) and a deployed position in which it forms an inclined plane between the ramp (5) and the access threshold (2);
the said device being **characterized in that** it comprises means (9, 10) for producing a mechanical connection between the ramp (5) and the flap (8) that are designed to move the flap (8) between its protection position and its deployed position during the movement of the ramp (5) between its stowed position and its deployed position and to move the ramp (5) from its stowed position to its deployed position during the movement of the flap (8) from its protection position to its deployed position.

2. Device according to Claim 1, **characterized in that** the ramp (5) comprises a plane inclined with respect to the axis A that is translatable along the axis A during the movement of the ramp (5) between the stowed position and the deployed position.

3. Device according to Claim 1 or 2, **characterized in that** the mechanical connection means comprise at least one roller (9) integral with the flap (8) and a guideway (10) for guiding the roller (9) that is integral with the ramp (5).

4. Device according to Claim 3, **characterized in that** the guideway (10) comprises a bent end.

5. Device according to any one of Claims 1 to 4, **characterized in that** it comprises drive means designed to drive the ramp (5) translationally, comprising motor means and disengageable transmission means for transmitting the movement of the motor means to the ramp (5).

6. Device according to Claim 5, **characterized in that** the drive means comprise a non-reversible reduction gear.

7. Device according to either of Claims 5 and 6, **characterized in that** it comprises manual control means for engaging and disengaging the transmission means.

8. Device according to one of Claims 1 to 7, **characterized in that** the ramp (5) comprises a chassis (18a, 18b) and a casing (17) which is moveable with respect to the chassis (18a, 18b), under the load of a person, and a pressure-sensitive sensor (19) arranged between the chassis (18a, 18b) and the casing (17) so as to detect the presence of a person on the casing (17).

9. Device according to Claim 8, **characterized in that** the casing (17) is pivotably mounted on the chassis (18a, 18b), about an axis C, perpendicular to the translation axis A.

10. Device according to Claim 9, **characterized in that** the ramp (5) has an inner end situated in the housing (3) when the ramp (5) is in the deployed position, the axis C being situated in the vicinity of the inner end.

11. Device according to any one of Claims 1 to 10, **characterized in that** the ramp (5) has a docking edge (15) made of rubber.

12. Device according to any one of Claims 1 to 11, **characterized in that** it comprises rails for guiding the ramp (5) between its stowed position in the housing and its deployed position.

13. Device according to one of Claims 1 to 12, **characterized in that** the ramp (5) comprises a transverse break line (22), perpendicular to the translation axis A, forming a defined path along which the ramp (5) breaks when a longitudinal bending stress is applied to the ramp (5).

14. Platform (1) for access to a vehicle comprising an access threshold (2) and a deployable device for access to the vehicle according to one of Claims 1 to 13 and a housing (3) for stowing the device extending below a vehicle access threshold (2) and having a window (4) allowing the deployment of the device.
